# EUROPEAN PATENT APPLICATION

(11) **EP 4 597 701 A1**
(43) Date of publication of application: **06.08.2025**
(21) Application number: 23871465.3
(22) Date of filing: 03.08.2023
(51) Int. Cl.: H01M 50/204, H01M 50/209, H01M 50/213, H01M 50/296, H01R 13/52

(54) **CONNECTOR WATERPROOF STRUCTURE AND BATTERY PACK EQUIPPED WITH CONNECTOR**

(30) Priority: 30.09.2022 JP 2022157583
(71) Applicant: Panasonic Energy Co., Ltd., Osaka 570-8511 (JP)
(72) Inventor: KURIHARA, Hidemi, Kadoma-shi, Osaka 571-0057 (JP)
(74) Representative: Novagraaf International SA
(86) International application number: PCT/JP2023/028445
(87) International publication number: WO 2024/070223

(57) **Abstract**

A connector is fixed to a fixed member with waterproof structure while manufacturing cost is reduced. The waterproof structure of a connector includes fixed member 2 provided with connector insertion port 2A and a plurality of screw insertion ports 2B, connector 3 including a connector body 31 and flange part 32, screw receiving member 4 disposed facing a second surface of fixed member 2 and into which fixing screw 7 having passed through flange part 32 and fixed member 2 is screwed, packing member 5, and O-ring 6. Screw receiving member 4 includes a plurality of screw fixing parts 41 into which fixing screws 7 are screwed without passing through corresponding screw fixing parts 41, and coupler 42 that couples the plurality of screw fixing parts 41. The waterproof structure is formed in which O-ring 6 seals an opening of each of screw insertion ports 2B while fixing screw 7 having inserted through screw insertion hole 33 of flange part 32 and the corresponding one of the screw insertion ports 2B is screwed into corresponding one of screw fixing parts 41 with O-ring 6 interposed therebetween, and packing member 5 is sandwiched between flange part 32 and fixed member 2 to seal an opening of connector insertion port 2A with packing member 5.

## Description

### TECHNICAL FIELD

The present disclosure relates to waterproof structure of a connector and a battery pack equipped with the connector.

### BACKGROUND ART

For driving an electric device such as a motor for a vehicle by using a chargeable secondary battery such as a lithium ion secondary battery, a power supply device is used in which many secondary battery cells are housed in an outer covering case (e.g., see PTL 1).

Some of this kind of power supply device includes a connector for charging and a connector for discharging that are provided in an outer covering case to charge and discharge a built-in secondary battery cell. When the connectors for charging and discharging disposed in the outer covering case are used outdoors, for example, the connectors for charging and discharging are preferably connected to the outer covering case with waterproof structure to prevent ingress of rainwater.

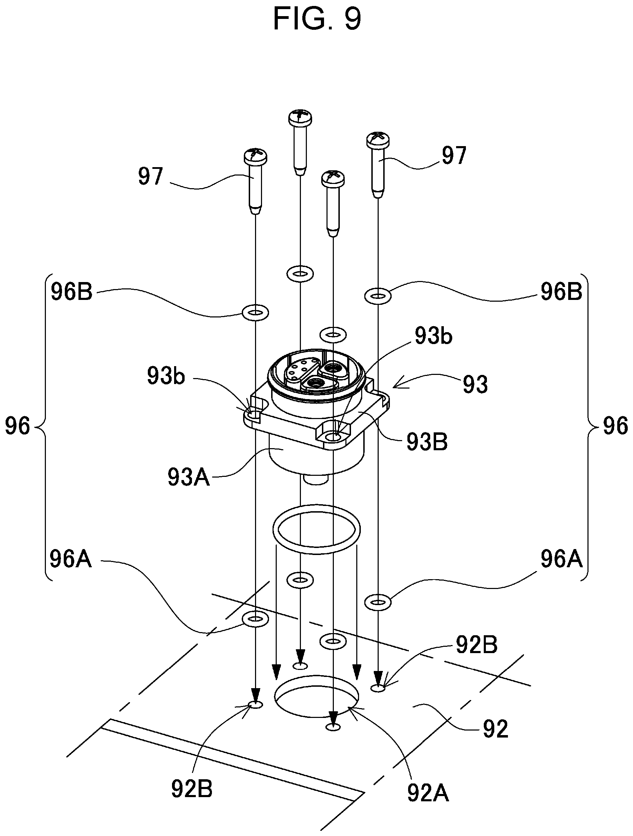

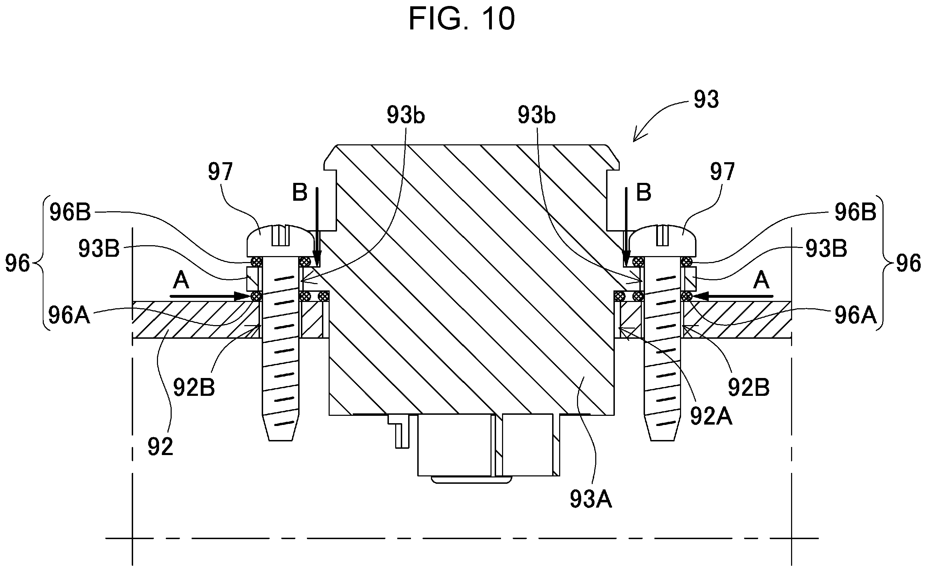

Figs. 9 and 10 illustrate an example of waterproof structure for connecting a connector to an outer covering case. Connector 93 illustrated in Fig. 9 includes connector body 93A connected to a connection plug, and flange part 93B that is used for connection and protrudes outward from an outer peripheral surface of connector body 93A. Connector 93 illustrated in the drawing includes flange part 93B that has a substantially square shape in plan view and that is provided on an outer peripheral surface of connector body 93A in a cylindrical shape. Flange part 93B is provided at its four corner parts with coupling holes 93b for inserting set screws 97 to constitute structure in which connector 93 is fixed to plate part 92 of the outer covering case by screwing set screws 97 inserted into coupling holes 93b into plate part 92. Plate part 92 of the outer covering case is provided with not only insertion opening 92A into which connector body 93A is inserted, but also female screw hole 92B into which set screw 97 is screwed, female screw hole 92B being provided around insertion opening 92A.

The conventional waterproof structure illustrated in Figs. 9 and 10 requires O-ring 96A for sealing an ingress path (indicated by arrow A) between flange part 93B connected facing an upper surface of plate part 92 and plate part 92, and O-ring 96B for sealing an ingress path (indicated by arrow B) between coupling hole 93b of flange part 93B and set screw 97, so that two O-rings 96 are required for one set screw 97. For this reason, connector 93 fixed by four set screws 97 as illustrated in the drawing requires a total of eight O-rings 96 to seal the ingress paths around set screws 97. Thus, the conventional waterproof structure has a problem that the number of components increases to cause not only increase in component cost, but also time and effort to be taken to manufacture the waterproof structure, thereby failing to produce a large amount at low cost.

The prevention structure illustrated in Figs. 9 and 10 causes set screw 97 to be screwed and fixed into plate part 92, so that plate part 92 needs to be provided with female screw hole 92B for screwing set screw 97. For this reason, when plate part 92 is made of metal, a thickness for providing female screw hole 92B is required, or when a resin plate is used as the plate part, a thickness and strength for screwing the set screw are required. Thus, there is a problem of restricting a plate part serving as a fixed member to which the connector is fixed.

### Citation List

### Patent Literature

PTL 1: Unexamined Japanese Patent Publication No. 2011-103259

### SUMMARY OF THE INVENTION

### Technical Problem

It is an object of the present disclosure to provide waterproof structure of a connector and a battery pack equipped with the connector having the waterproof structure, the waterproof structure not only allowing the connector to be simply and easily fixed to a fixed member such as an outer covering case with the waterproof structure while reducing manufacturing cost, but also enabling the connector to be reliably fixed with the waterproof structure without being restricted by a material or a thickness of the fixed member. Solution to Problem

Waterproof structure of a connector according to an aspect of the present invention includes: a connector including a fixed member having a connector insertion port opened and a plurality of screw insertion ports provided around the connector insertion port, a connector body inserted into the connector insertion port, and a flange part provided along a periphery of the connector body and disposed facing a first surface of the fixed member; a screw receiving member disposed facing a second surface of the fixed member and into which a fixing screw passing through the flange part and the fixed member is screwed; a packing member interposed between the fixed member and the flange part, and disposed along an edge of an opening of the connector insertion port; and an O-ring interposed between the fixed member and the screw receiving member, and disposed along an edge of an opening of each of the screw insertion ports. The screw receiving member includes a plurality of screw fixing parts disposed facing the respective screw insertion ports and into which the fixing screws are screwed without passing through the respective screw fixing parts, and a coupler formed by coupling the plurality of screw fixing parts. The flange part includes a screw insertion hole at a position facing corresponding one of the screw insertion ports. The waterproof structure is formed in which the O-ring seals the opening of each of the screw insertion ports while the fixing screw having inserted through the screw insertion hole and the corresponding one of the screw insertion ports is screwed into corresponding one of the screw fixing parts with the O-ring interposed therebetween, and the packing member is sandwiched between the flange part and the fixed member to seal the opening of the connector insertion port with the packing member.

A battery pack according to an aspect of the present invention includes a connector disposed with the waterproof structure described above, the battery pack including: an outer covering case configured to house one or more secondary battery cells; and a connector provided in the outer covering case for charging and/or discharging the secondary battery cells, in which the connector is provided in the outer covering case with the waterproof structure, the outer covering case serving as the fixed member.

### Advantageous Effects of Invention

The waterproof structure of the connector and the battery pack equipped with the connector according to an aspect of the present invention achieves an advantage of not only allowing the connector to be simply and easily fixed to the fixed member such as the outer covering case with the waterproof structure while reducing manufacturing cost, but also enabling the connector to be reliably fixed with the waterproof structure without being restricted by a material or a thickness of the fixed member.

### BRIEF DESCRIPTION OF THE DRAWINGS

Fig. 1 is an enlarged sectional view illustrating waterproof structure of a connector according to an exemplary embodiment of the present invention.
Fig. 2 is an exploded perspective view of the waterproof structure illustrated in Fig. 1.
Fig. 3 is a bottom perspective view of the waterproof structure illustrated in Fig. 2 as viewed from below.
Fig. 4 is an enlarged sectional view illustrating waterproof structure of a connector according to another exemplary embodiment of the present invention.
Fig. 5 is a perspective view of a battery pack according to an exemplary embodiment of the present invention.
Fig. 6 is a vertical sectional view taken along line VI-VI in Fig. 5.
Fig. 7 is an exploded perspective view of the battery pack illustrated in Fig. 5.
Fig. 8 is an exploded perspective view of the battery pack illustrated in Fig. 5 as viewed from below a bottom surface.
Fig. 9 is an exploded perspective view illustrating an example of waterproof structure of a conventional connector.
Fig. 10 is an enlarged sectional view of the waterproof structure illustrated in Fig. 9.

### DESCRIPTION OF EMBODIMENT

Waterproof structure of a connector according to an aspect of the present invention includes: a connector including a fixed member having a connector insertion port opened and a plurality of screw insertion ports provided around the connector insertion port, a connector body inserted into the connector insertion port, and a flange part provided along a periphery of the connector body and disposed facing a first surface of the fixed member; a screw receiving member disposed facing a second surface of the fixed member and into which a fixing screw passing through the flange part and the fixed member is screwed; a packing member interposed between the fixed member and the flange part, and disposed along an edge of an opening of the connector insertion port; and an O-ring interposed between the fixed member and the screw receiving member, and disposed along an edge of an opening of each of the screw insertion ports, the screw receiving member including a plurality of screw fixing parts disposed facing the respective screw insertion ports and into which the fixing screws are screwed without passing through the respective screw fixing parts, and a coupler formed by coupling the plurality of screw fixing parts, the flange part including a screw insertion hole at a position facing corresponding one of the screw insertion ports, in which the O-ring seals the opening of each of the screw insertion ports while the fixing screw having inserted through the screw insertion hole and the corresponding one of the screw insertion ports is screwed into corresponding one of the screw fixing parts with the O-ring interposed therebetween, and the packing member is sandwiched between the flange part and the fixed member to seal the opening of the connector insertion port with the packing member.

The above waterproof structure allows the O-ring disposed facing the second surface of the fixed member to seal both of the ingress path between the flange part of the connector and the fixed member, and the ingress path between the screw insertion hole of the flange part and the fixing screw, the ingress paths being formed facing the first surface of the fixed member, so that there is an advantage of efficient manufacturing at low cost achieved by reducing time and effort required for manufacturing while the number of O-rings to be used is reduced to half of the conventional number to reduce component cost. Additionally, the fixing screw passing through the flange part of the connector and the fixed member is screwed and fixed to the screw fixing part of the screw receiving member, so that an advantage can be achieved in which the connector can be reliably fixed to various fixed members with the waterproof structure without providing a female screw in the screw insertion port of the fixed member, i.e., without being restricted by material and thickness of the fixed member.

Waterproof structure of a connector according to another aspect of the present invention can be configured to include the packing member that is in a plate shape having a center hole opened along the edge of the opening of the connector insertion port of the fixed member, and that includes an outer peripheral part facing the screw insertion port, the outer peripheral part including a through-hole opened along the edge of the opening of each of the screw insertion ports.

The above waterproof structure allows the packing member for sealing the connector insertion port of the fixed member to have a plate shape having the center hole opened along the edge of the opening of the connector insertion port, so that the connector insertion port can be reliably sealed and waterproofed by sandwiching the packing member between the fixed member and the flange part while the connector body is inserted into the center hole. The packing member in a plate shape includes the through-hole opened along the edge of the opening of each of the screw insertion ports in the outer peripheral part facing the screw insertion port, so that there is also an advantage of allowing the ingress path between the flange part of the connector and the fixed member to be sealed with the packing member by interposing an outer peripheral edge part of the through-hole between the flange part and the fixed member for sealing.

Waterproof structure of a connector according to yet another aspect of the present invention can be configured to include the screw fixing part of the screw receiving member, the screw fixing part including an insertion hole for guiding the fixing screw, the insertion hole being formed into a female screw hole to be screwed with the fixing screw.

The above waterproof structure enables the fixed member to be reliably and firmly fixed in a state where the fixed member is sandwiched between the flange part of the connector and the screw receiving member by screwing the fixing screw into the female screw hole provided in the screw fixing part.

Waterproof structure of a connector according to yet another aspect of the present invention can be configured to use a tapping screw as the fixing screw, and provide a guide hole for guiding the tapping screw in the screw fixing part.

The above waterproof structure is configured to use the tapping screw as the fixing screw, and thus enables the tapping screw to be screwed and reliably fixed without providing a female screw in the screw fixing part. The screw fixing part is also provided with the guide hole for guiding the tapping screw, so that the tapping screw can be screwed while being guided to an accurate position in the screw fixing part.

Waterproof structure of a connector according to yet another aspect of the present invention can be configured to include the screw receiving member provided with a positioning recess for fixing the O-ring at a fixed position, the O-ring being disposed along the edge of the opening of each of the screw insertion ports.

The above waterproof structure has an advantage of enabling a plurality of O-rings interposed between the fixed member and the screw receiving member to be simply and easily disposed at the fixed position in the edge of the opening of each of the screw insertion ports. This is because the screw receiving member includes the positioning recess that allows each of the O-rings to be disposed at a fixed position. This structure also has an advantage of enabling the plurality of O-rings to be efficiently disposed at fixed positions of the plurality of screw insertion ports, thereby improving work efficiency.

Waterproof structure of a connector according to yet another aspect of the present invention can be configured to include the screw receiving member that specifies the amount of squeezing of the O-ring in a state where an opening edge part of the positioning recess is in contact with the second surface of the fixed member.

The above waterproof structure allows the amount of squeezing of the O-ring to be specified by bringing the opening edge part of the positioning recess into contact with the second surface of the fixed member, so that there is an advantage of not only allowing the O-ring to be elastically deformed and reliably sealed always having an ideal amount of squeezing without being affected by a degree of tightening of the fixing screw, but also allowing a stable waterproof structure to be maintained for a long period of time by effectively preventing acceleration of degradation over time due to excessive squeezing of the O-ring. Additionally, the opening edge part of the positioning recess is brought into contact with the second surface of the fixed member, and the fixed member is sandwiched between the flange part and the screw receiving member, so that there is also an advantage of enabling the connector to be more firmly fixed to the fixed member.

A battery pack according to an aspect of the present invention includes a connector disposed with any one of the waterproof structures described above, the battery pack including: an outer covering case configured to house one or more secondary battery cells; and a connector provided in the outer covering case for charging and/or discharging the secondary battery cells, in which the connector is provided in the outer covering case with the waterproof structure, the outer covering case serving as the fixed member.

Hereinafter, an exemplary embodiment of the present invention will be described with reference to the drawings. However, the exemplary embodiment below exemplifies waterproof structure of a connector for embodying the technical idea of the present invention and a battery pack including the connector, and the present invention is not limited to the following waterproof structure and battery pack. The present specification does not specify the members shown in the scope of claims as the members of the exemplary embodiment. In particular, the dimensions, materials, shapes, relative arrangements, and the like of the components described in the exemplary embodiment are not intended to limit the scope of the present invention exclusively unless otherwise specified, and are merely illustrative examples. Each drawing may illustrate members with sizes, positional relationships, or the like that may be exaggerated for clarity of description. In the following description, the same names and reference numerals indicate the same or similar members, so that detailed description thereof will not be described as appropriate. Additionally, each element constituting the present invention may have an aspect in which a plurality of elements is formed of one member and the one member serves as the plurality of elements, or conversely, a function of one member may be shared and achieved by a plurality of members.

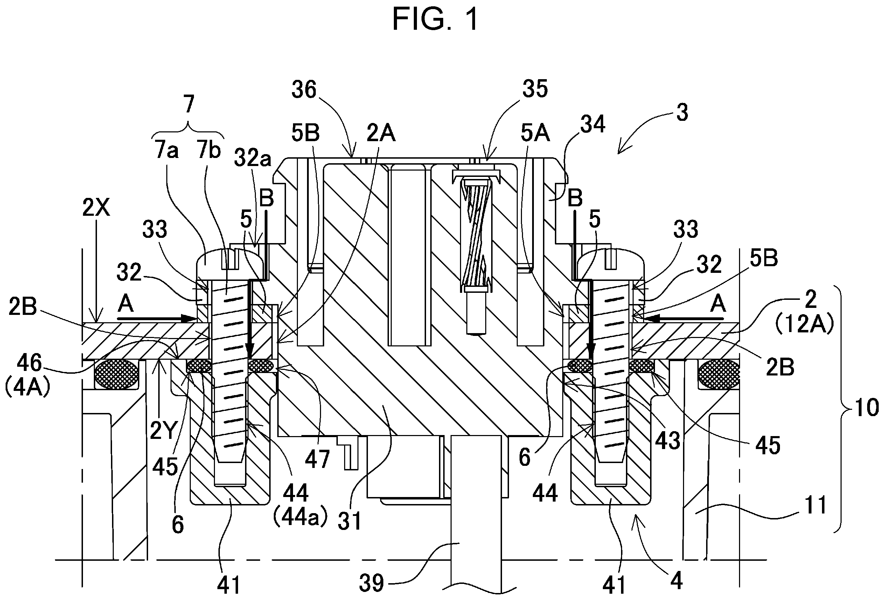

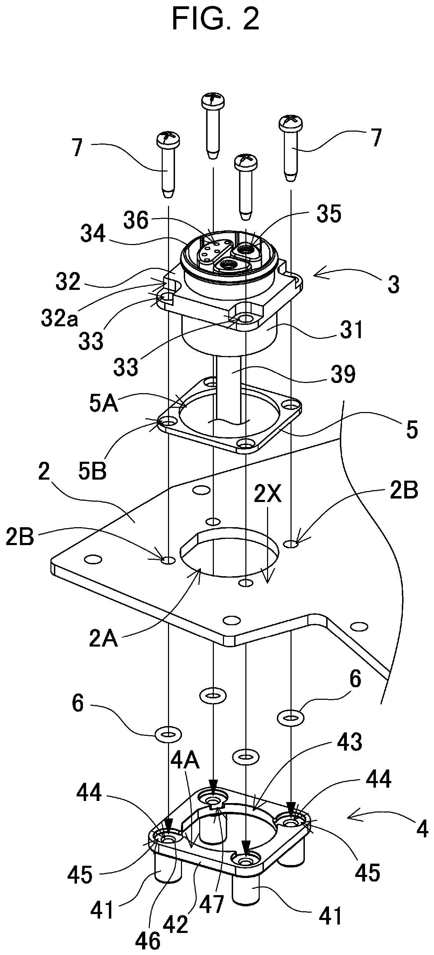

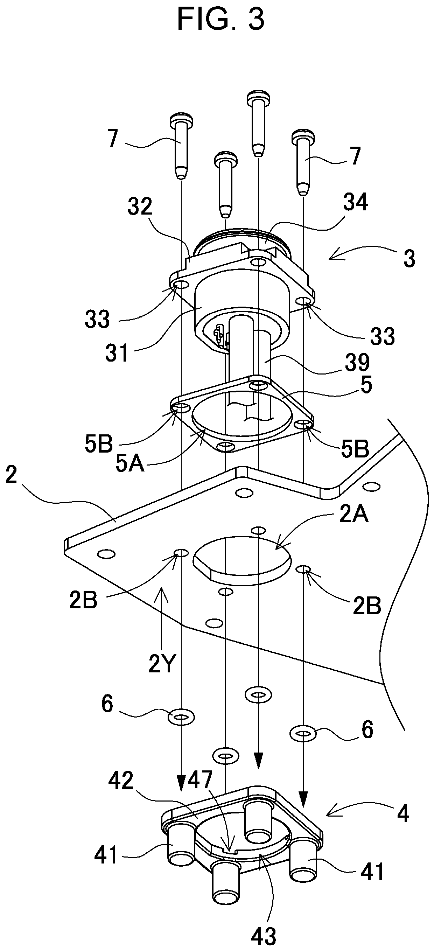

[First exemplary embodiment] Figs. 1 to 3 illustrate waterproof structure of a connector according to an exemplary embodiment of the present invention. In these drawings, Fig. 1 is an enlarged sectional view illustrating the waterproof structure of the connector, Fig. 2 is an exploded perspective view of the waterproof structure illustrated in Fig. 1, and Fig. 3 is a bottom perspective view of Fig. 2 as viewed from below. The waterproof structure of a connector illustrated in these drawings includes: connector 3 including fixed member 2 having connector insertion port 2A opened and a plurality of screw insertion ports 2B provided around connector insertion port 2A, connector body 31 inserted into connector insertion port 2A, and flange part 32 provided along a periphery of connector body 31 and disposed facing first surface 2X of fixed member 2; screw receiving member 4 disposed facing second surface 2Y of fixed member 2 and into which fixing screw 7 passing through flange part 32 and fixed member 2 is screwed; packing member 5 interposed between fixed member 2 and flange part 32, and disposed along an edge of an opening of connector insertion port 2A; and O-ring 6 interposed between fixed member 2 and screw receiving member 4, and disposed along an edge of an opening of each of screw insertion holes 33.

### (Fixed member 2)

Fixed member 2 is a member to which connector 3 is fixed, and can be plate part 12A constituting one surface of a housing to which connector 3 is fixed. The waterproof structure illustrated in Figs. 1 to 3 shows an example in which an outer covering case of a battery pack described later serves as the housing to which connector 3 is fixed, and plate part 12A of outer covering case 10 serves as fixed member 2 to which connector 3 is fixed. Fixed member 2 composed of plate part 12A of outer covering case 10 can be a metal plate or a resin plate, for example.

Fixed member 2 being plate part 12A opens connector insertion port 2A into which connector body 31 of connector 3 is inserted in a region where connector 3 is fixed. Connector 3 illustrated in the drawing includes connector body 31 protruding above and blow flange part 32, and connector insertion port 2A is opened in a shape into which connector body 31 protruding below flange part 32 can be inserted. Connector body 31 illustrated in the drawing has an outer shape in a cylindrical shape, so that connector insertion port 2A is opened in a substantially circular shape slightly larger than the outer shape of connector body 31.

Fixed member 2 is also provided with a plurality of screw insertion ports 2B around connector insertion port 2A. Fixed member 2 illustrated in the drawing is provided with screw insertion ports 2B opened at positions facing four respective corners of flange part 32, flange part 32 of connector 3 having a substantially square shape in plan view. Although described in detail later, screw insertion port 2B is a clearance hole through which fixing screw 7 is inserted, and has an inner diameter slightly larger than an outer shape of fixing screw 7. Screw insertion port 2B, which is a clearance hole, can be easily opened by punching or drilling.

### (Connector 3)

Connector 3 is fixed to fixed member 2 being plate part 12A of the housing such as outer covering case 10 with waterproof structure, and is connected to an external device using a cable or the like including a connection plug (not illustrated). Connector 3 illustrated in the drawing includes connector body 31 inserted into connector insertion port 2A of fixed member 2, and flange part 32 provided along the periphery of connector body 31 and disposed facing first surface 2X (upper surface in the drawing) of fixed member 2. Connector 3 illustrated in the drawing includes flange part 32 disposed on the surface of fixed member 2, flange part 32 being formed in a planar shape, and connector body 31 in a columnar shape, connector body 31 being connected to flange part 32, connector body 31 orienting perpendicular to flange part 32. Connector body 31 protrudes to both sides of flange part 32, and is disposed at a fixed position of fixed member 2 in a state where a part protruding toward one side (downward in the drawing) is inserted into connector insertion port 2A. Connector body 31 includes an insertion part to be inserted into connector insertion port 2A, and a plurality of lead wires 39 drawn out from a distal end side of the insertion part. Connector body 31 includes a protruding part protruding toward the other side (upward in the drawing) of flange part 32, the protruding part including body tubular part 34 in a cylindrical shape, body tubular part 34 being internally provided with a plurality of terminal couplers 35 that is connected to a connection plug (not illustrated).

Flange part 32 is disposed along first surface 2X of fixed member 2 and is fixed to fixed member 2 with fixing screw 7. Flange part 32 has a plate shape protruding in an outer peripheral direction of connector body 31, and is provided in its outer peripheral part with a plurality of screw insertion holes 33 through which respective fixing screws 7 are inserted. Flange part 32 illustrated in the drawing has a substantially square shape in plan view, and is provided at four corners of the square with screw insertion holes 33 opened. However, flange part 32 does not necessarily have a square shape in plan view, and may have a circular shape, an elliptical shape, a rectangular shape, or a polygonal shape.

Screw insertion hole 33 is disposed at a position facing screw insertion port 2B opened in fixed member 2. In other words, screw insertion port 2B of fixed member 2 is provided opening at a position facing screw insertion hole 33 of flange part 32 disposed in first surface 2X. Flange part 32 illustrated in Figs. 2 and 3 is positioned at the four corners of the square with respective screw insertion holes 33, so that there is an advantage of enabling flange part 32 to be fixed to fixed member 2 in a well-balanced manner. Although flange part 32 in the drawing includes screw insertion holes 33 opened at the four corners, the screw insertion holes opened in the outer peripheral part of the flange part can be variously changed in number and place depending on an outer shape. In this configuration, each of the screw insertion ports of the fixed member is opened at a position facing the screw insertion hole opened in the flange part.

Flange part 32 illustrated in the drawing is provided at the four corners with respective recesses 32a for guiding head parts 7a of corresponding fixing screws 7, and recesses 32a are each provided at its bottom surface with screw insertion hole 33 opened. This structure has an advantage of enabling head part 7a of fixing screw 7 to be disposed in a space-saving manner without protruding head part 7a from flange part 32. However, flange part 32 may have a plate shape with a uniform thickness to open screw insertion hole 33 at the corner without being provided with recess 32a. Although described in detail later, screw insertion hole 33 is a clearance hole through which fixing screw 7 is inserted, and has an inner diameter slightly larger than the outer shape of fixing screw 7. Screw insertion port 2B, which is a clearance hole, can be easily opened by punching or drilling.

### (Screw receiving member 4)

Screw receiving member 4 is disposed facing second surface 2Y (lower surface in the drawing) of fixed member 2, and fixing screw 7 passing through flange part 32 and fixed member 2 is screwed into screw receiving member 4. Screw receiving member 4 includes a plurality of screw fixing parts 41 disposed facing respective screw insertion ports 2B and into which fixing screws 7 are screwed without passing through respective screw fixing parts 41, and coupler 42 formed by coupling the plurality of screw fixing parts 41. Fixed member 2 illustrated in the drawing is provided with four screw insertion ports 2B, so that screw receiving member 4 has a shape formed by connecting four screw fixing parts 41 with coupler 42. Screw receiving member 4 formed by coupling the plurality of screw fixing parts 41 with coupler 42 has a substantially square outer shape as illustrated in Figs. 2 and 3, and is provided at its central part with connector insertion part 43 that is opened and through which connector body 31 passes, connector body 31 being inserted into connector insertion port 2A of fixed member 2. Screw receiving member 4 illustrated in the drawing includes connector insertion part 43 having an inner shape that substantially coincides with an outer shape of connector body 31, and prevents falling or the like of connector body 31 during attachment work using a frictional force generated between screw receiving member 4 and connector body 31, the frictional force allowing screw receiving member 4 to be temporarily connected to connector body 31. However, connector insertion part 43 of screw receiving member 4 can be made slightly larger than the outer shape of connector body 31. Screw receiving member 4 includes screw fixing part 41 and coupler 42 that are integrally molded with a resin such as polycarbonate so that fixing screw 7 can be screwed into screw fixing part 41. Alternatively, screw receiving member 4 may be molded with another resin or may be made of metal into which a fixing screw can be screwed.

Screw fixing part 41 has a columnar shape extended along the axis of the screw so that fixing screw 7 can be deeply screwed. Screw fixing part 41 in a columnar shape is longer in overall length than an insertion part of fixing screw 7 to prevent the screw inserted from passing through screw fixing part 41. Screw fixing part 41 illustrated in Fig. 1 has a cylindrical shape as a whole, and is provided at its central part with insertion hole 44 into which fixing screw 7 is screwed, fixing screw 7 having passed through flange part 32 and fixed member 2. Screw fixing part 41 illustrated in Fig. 1 includes insertion hole 44 serving as female screw hole 44a to be screwed with fixing screw 7. When fixing screw 7 is screwed into female screw hole 44a provided in screw fixing part 41 to firmly couple fixing screw 7 to screw fixing part 41, fixed member 2 can be fixed while being sandwiched between connector 3 and screw receiving member 4.

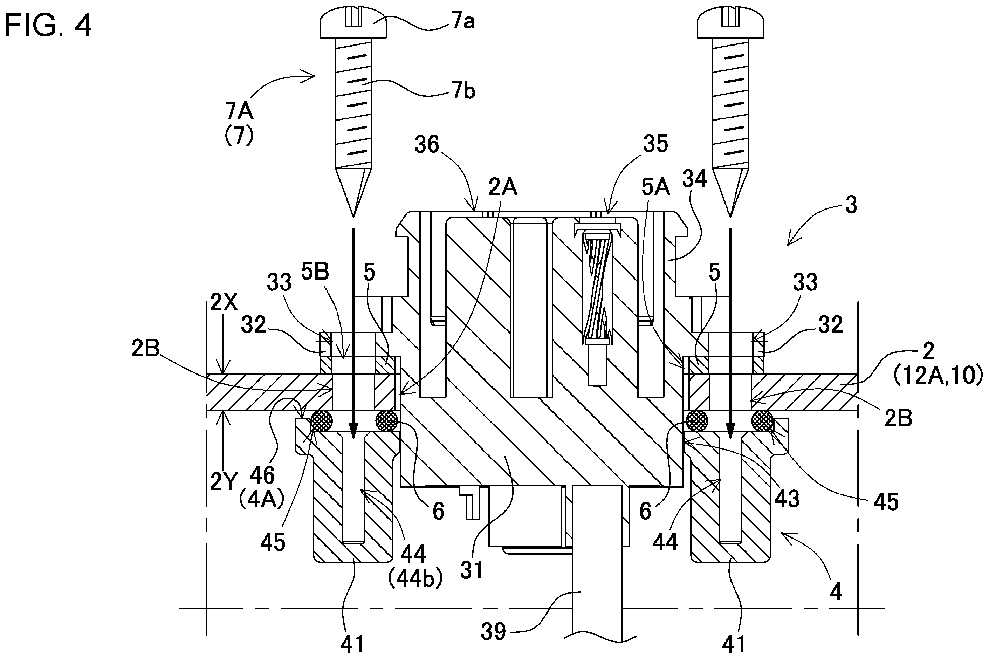

Although screw fixing part 41 described above is provided with female screw hole 44a to which fixing screw 7 is screwed, screw fixing part 41 is not limited to the structure in which female screw hole 44a is provided to be screwed with fixing screw 7. For example, the waterproof structure illustrated in Fig. 4 illustrates an example in which fixing screw 7 is screwed into screw fixing part 41 by serving as tapping screw 7A. Screw fixing part 41 illustrated in Fig. 4 is provided at the central part with insertion hole 44 serving as guide hole 44b for guiding a tip part of tapping screw 7A. Guide hole 44b is thinner than screw part 7b of tapping screw 7A, and is not internally provided with a female screw. This structure enables fixing screw 7 to be reliably screwed and fixed while guiding the tip of tapping screw 7A into guide hole 44b. In particular, there is an advantage of easily providing insertion hole 44b in screw fixing part 41.

As described above, connector 3 can be fixed without providing a female screw in screw insertion port 2B of fixed member 2 by using the structure in which fixing screw 7 having passed through flange part 32 of connector 3 and fixed member 2 is screwed and fixed to screw fixing part 41 of screw receiving member 4. Thus, connector 3 can be fixed to various fixed members 2 while achieving excellent waterproof structure without being restricted by a material and thickness of fixed member 2.

### (Positioning recess 45)

Screw fixing part 41 is further provided in an opening edge part of insertion hole 44 with positioning recess 45 for disposing O-ring 6 at a fixed position, O-ring 6 being disposed along an edge of an opening of screw insertion port 2B provided in fixed member 2. Positioning recess 45 illustrated in the drawing is a circular stepped recess having an outer shape substantially coinciding with an outer shape of O-ring 6. Screw fixing part 41 having this structure has an advantage of enabling improvement in work efficiency by disposing O-ring 6 in positioning recess 45 to allow a plurality of O-rings 6 to be efficiently disposed at respective fixed positions of a plurality of screw insertion ports 2B. Although positioning recess 45 illustrated in the drawing is a stepped recess, positioning recess 45 may be a ring groove into which O-ring 6 can be fitted.

Positioning recess 45 is formed to be shallower than a thickness of O-ring 6, and constitutes the structure illustrated in Fig. 1, in which when fixing screw 7 is screwed into screw fixing part 41, opening edge part 46 of positioning recess 45 serving as facing surface 4A of screw receiving member 4 is brought into contact with second surface 2Y of fixed member 2 while O-ring 6 is sandwiched and elastically squeezed between a bottom surface of positioning recess 45 and second surface 2Y of fixed member 2. This structure has an advantage of enabling the amount of squeezing of O-ring 6 to be specified by tightening fixing screw 7 until opening edge part 46 of positioning recess 45 comes into contact with second surface 2Y of fixed member 2.

The conventional waterproof structure illustrated in Figs. 9 and 10 has a problem that a degree of tightening of set screw 97 becomes difficult because set screw 97 is screwed into plate part 92 to sandwich not only O-ring 96B between a head part of set screw 97 and flange part 93B to squeeze O-ring 96B for sealing, but also O-ring 96A between flange part 93B and plate part 92 to squeeze O-ring 96A for sealing. This is because too weak fastening of set screw 97 fails to sufficiently squeeze O-ring 96 and thus causes insufficient sealing of O-ring 96, and conversely, too strong fastening of set screw 97 causes excessive squeezing of O-ring 96 and excessive elastic deformation, whereby degradation is promoted over time, and a stable waterproof structure may not be maintained for a long period of time. Even when set screw 97 is tightened to obtain an optimum elastic deformation state without excessively squeezing O-ring 96, there is also a disadvantage of causing connector 93 itself to wobble with respect to plate part 92 when O-ring 96 has a margin in the amount of elastic deformation.

In contrast, the structure illustrated in Fig. 1, in which opening edge part 46 of positioning recess 45 is brought into contact with second surface 2Y of fixed member 2 to specify the amount of squeezing of O-ring 6, has an advantage of enabling the amount of squeezing of O-ring 6 to be easily and reliably specified by forming positioning recess 45 with a depth equal to a thickness of O-ring 6 in an ideally squeezed state. Thus, degradation over time is suppressed by squeezing O-ring 6 to the amount of squeezing specified by the depth of positioning recess 45 to reliably seal without being affected by a degree of tightening of fixing screw 7. Additionally, fixing screw 7 is tightened until opening edge part 46 of positioning recess 45, which is facing surface 4A of screw receiving member 4, is brought into contact with second surface 2Y of fixed member 2, and fixed member 2 is sandwiched between flange part 32 and screw receiving member 4, so that there is also an advantage of enabling connector 3 to be more firmly fixed to fixed member 2. The depth of positioning recess 45 is determined in consideration of a material and a thickness of O-ring 6, and an ideal amount of squeezing (amount of elastic deformation).

Screw fixing part 41 illustrated in Figs. 2 and 3 is further provided with cutout 47 communicating with positioning recess 45 by cutting out a part of opening edge part 46 of positioning recess 45. Screw fixing part 41 illustrated in the drawing includes cutout 47 that is opened toward connector insertion part 43, and thus causing positioning recess 45 to communicate with connector insertion part 43 through cutout 47. This structure has an advantage of enabling O-ring 6 to be reliably deformed and squeezed by releasing air from cutout 47 even when fixing screw 7 is screwed into screw fixing part 41 and O-ring 6 is sandwiched and squeezed between the bottom surface of positioning recess 45 and second surface 2Y of fixed member 2 to cause an opening of positioning recess 45 to be closed by O-ring 6 in close contact.

### (Packing member 5)

Packing member 5 is interposed between fixed member 2 and flange part 32, and is disposed along the edge of the opening of connector insertion port 2A. Packing member 5 is made of rubber or soft plastic, and is crimped while being in close contact with flange part 32 and first surface 2X of fixed member 2 in a state where fixing screw 7 having inserted into screw insertion hole 33 and screw insertion port 2B is screwed into screw fixing part 41 to seal the opening of connector insertion port 2A.

Packing member 5 illustrated in Fig. 2 has a plate shape having center hole 5A opened along the edge of the opening of connector insertion port 2A of fixed member 2. Packing member 5 in a plate shape is further enlarged having an outer shape along an outer shape of flange part 32 to form a structure in which outer peripheral part facing screw insertion hole 33 and screw insertion port 2B is provided with through-hole 5B opened along the edges of the openings of screw insertion hole 33 and screw insertion port 2B. Packing member 5 with this structure can reliably seal and waterproof connector insertion port 2A by being sandwiched between fixed member 2 and flange part 32 while connector body 31 is inserted into center hole 5A. Packing member 5 includes an outer peripheral part provided with through-hole 5B, the outer peripheral part facing screw insertion hole 33 and screw insertion port 2B, so that an ingress path between flange part 32 and fixed member 2 can be sealed with packing member 5 by interposing an outer peripheral edge part of through-hole 5B between flange part 32 and fixed member 2. However, packing member 5 does not necessarily need to have a structure in which the outer peripheral part is expanded to seal screw insertion hole 33 and screw insertion port 2B. Although not illustrated, packing member 5 can be interposed between the fixed member and the flange part as an O-ring that is interposed between the fixed member and the flange part, and that is disposed along the edge of the opening of the connector insertion port.

### (O-ring 6)

O-ring 6 is interposed between fixed member 2 and screw fixing part 41 of screw receiving member 4, and is disposed along an edge of an opening of screw insertion port 2B. O-ring 6 is crimped between second surface 2Y of fixed member 2 and screw fixing part 41 in a close contact manner to seal the opening of screw insertion port 2B when fixing screw 7 is inserted into O-ring 6 and screwed into screw fixing part 41, fixing screw 7 having been inserted through screw insertion hole 33 of flange part 32 and screw insertion port 2B of fixed member 2. That is, fixing screw 7 having been inserted through screw insertion hole 33 and screw insertion port 2B is screwed into screw fixing part 41 with O-ring 6 interposed therebetween, so that the opening of screw insertion port 2B is sealed with O-ring 6. The waterproof structure illustrated in the drawing includes screw insertion ports 2B that are opened at four respective positions of fixed member 2, so that one O-ring 6 is disposed between each of screw insertion ports 2B and corresponding one of screw fixing part 41, i.e., four O-rings 6 are disposed as a whole, and thus all screw insertion ports 2B are sealed with respective O-rings 6 in a waterproof manner.

This waterproof structure enables one O-ring 6 disposed facing second surface 2Y of fixed member 2 to seal both of both of the ingress path formed between flange part 32 and fixed member 2 while facing first surface 2X of fixed member 2 as indicated by arrow A in Fig. 1 and the ingress path formed between screw insertion hole 33 of flange part 32 and fixing screw 7 as indicated by arrow B in Fig. 1, so that an advantage of efficient manufacturing can be achieved by reducing the number of O-rings 6 to be used to reduce not only labor and effort taken for the manufacturing but also component cost.

The connector fixed with the above waterproof structure is suitably used for various electric devices requiring a waterproof structure and including the connector. The term, electric devices, is herein used in a broad sense including not only loads driven by supply of electric power but also battery packs or power supply devices that supply electric power to the loads.

As an example of an electric device including the connector fixed with the above waterproof structure, a battery pack including the connector will be described below. The battery pack including the connector can be used for a power source for driving a self-propelled robot for home delivery, an electric cart for home delivery or a golf course, an electric scooter, a construction machine, or a vehicle such as a hybrid vehicle or an electric vehicle, for example. The battery pack can be also used for not only a power source for driving an electric-assist bicycle, but also power sources for portable electric devices such as a wireless device, an electric cleaner, and an electric tool. Alternatively, the battery pack can be used as a backup power source for a server or a power source device for home use, business use, or factory use in a stationary power storage application. Hereinafter, a battery pack used as a driving power source of a self-propelled robot will be described as an exemplary embodiment of a battery pack.

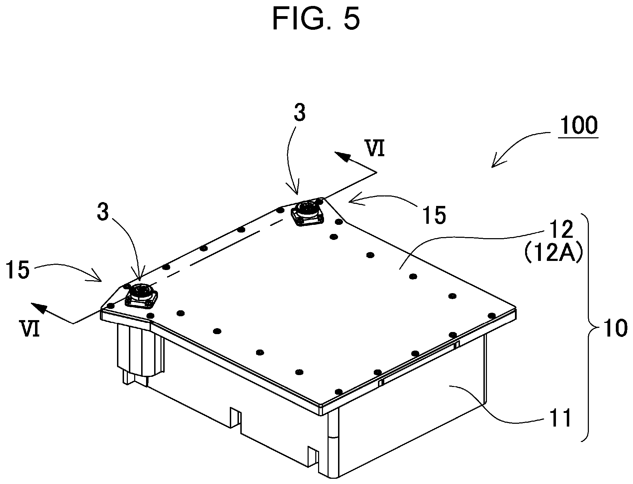

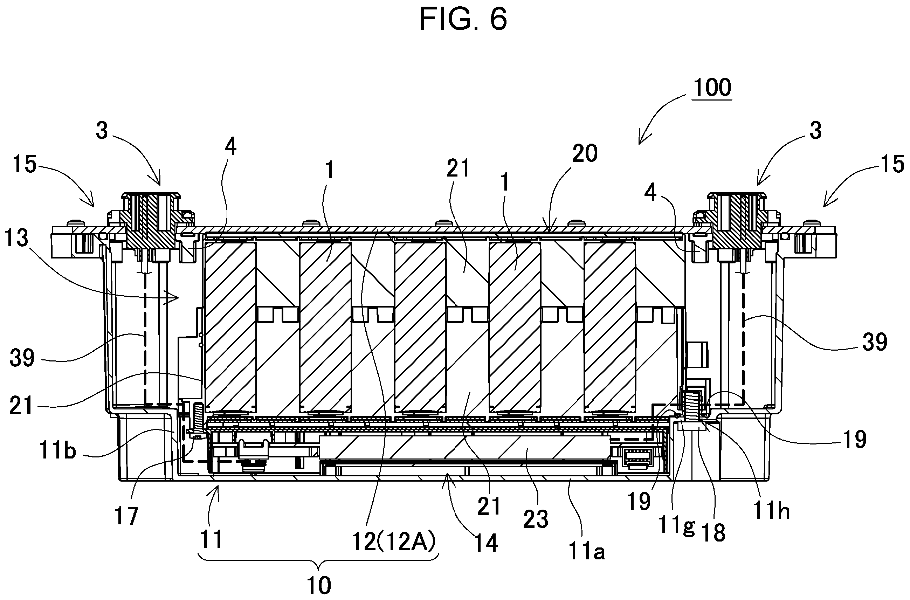

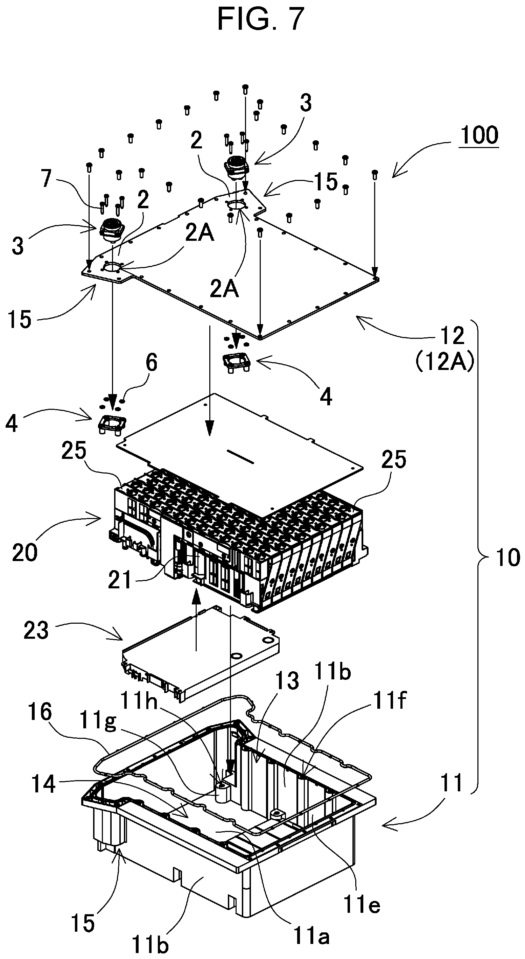

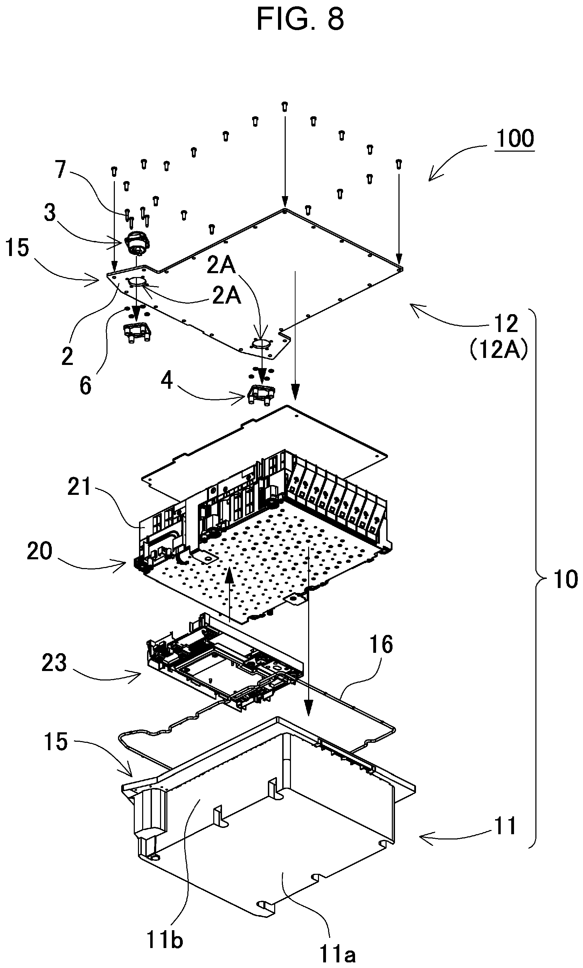

Battery pack 100 according to an exemplary embodiment of the present invention is illustrated in Figs. 5 to 8. In these drawings, Fig. 5 is a perspective view of battery pack 100, Fig. 6 is a vertical sectional view taken along line VI-VI in Fig. 5, Fig. 7 is an exploded perspective view of battery pack 100 in Fig. 5, and Fig. 8 is an exploded perspective view of battery pack 100 in Fig. 5 as viewed from below its bottom surface. Battery pack 100 illustrated in these drawings includes outer covering case 10 that houses one or more secondary battery cells 1, and connector 3 that is fixed to outer covering case 10 for charging and/or discharging secondary battery 1 housed in outer covering case 10.

### (Outer covering case 10)

Outer covering case 10 houses battery module 20 including one or more secondary battery cells 1 and circuit board 23. As illustrated in Figs. 5 to 8, outer covering case 10 is formed in the shape of a rectangular box in plan view with an external appearance extended in one direction. Outer covering case 10 in the shape of a box includes body case 11 molded into a box shape with a bottom and an open top, and lid case 12 that closes an opening of body case 11. As illustrated in Figs. 5 to 8, outer covering case 10 is internally provided with housing space 13 for housing battery module 20 and circuit board 23.

Outer covering case 10 illustrated in the drawings is divided into body case 11 and lid case 12. Body case 11 and lid case 12, which are divided, include outer peripheral parts facing each other and being fixed to each other by screwing, fitting, bonding, ultrasonic welding, or the like. The drawings show an example in which body case 11 and lid case 12 are screwed together, and packing 16 is interposed between body case 11 and lid case 12 to exert waterproof performance. The example of the drawings shows body case 11 in the shape of a box with an open top, and lid case 12 that is plate part 12A in the shape of a plate. This outer covering case 10 includes body case 11 that is a member having excellent insulation properties and being made of resin such as polycarbonate or a PC-ABS alloy, and plate part 12A serving as lid case 12 and being a metal plate. Alternatively, outer covering case 10 may include body case 11 and lid case 12 that are each made of resin.

Body case 11 includes bottom plate 11a, and side plate 11b connected to a periphery of bottom plate 11a. Inside bottom plate 11a, housing 14 for housing circuit board 23 is provided. Side plate 11b is provided with a plurality of ribs 11e spaced apart from each other. Each rib 11e is extended along a thickness of body case 11, and contributes to reinforcement of body case 11. As illustrated in Fig. 7, each rib 11e has an end surface in which screw hole 11f for fixing lid case 12 is opened.

As illustrated in Figs. 6 and 7, body case 11 further includes bosses 11g provided with respective screw holes 11h for fixing battery module 20, bosses 11g being formed at six locations in total including corners of body case 11 in a rectangular shape, and midpoints of respective long sides thereof.

### (Secondary battery cell 1)

As the one or more secondary battery cells 1, a secondary battery cell with an outer covering can in a square shape or a cylindrical shape can be used. Figs. 6 to 8 show an example in which 120 secondary battery cells 1 each in a cylindrical shape are disposed in a vertical orientation. Secondary battery cells 1 are connected to one another in ten-series and twelve-parallel arrangement. The number and arrangement of the secondary battery cells, the number of series and parallel connections, and the like are not limited to this example, and any number and arrangement can be appropriately used. Each secondary battery cell 1 has positive and negative electrodes. The positive and negative electrodes are preferably provided on one end surface of each secondary battery cell 1. For this kind of secondary battery cell 1, a known secondary battery such as a lithium ion secondary battery, a nickel hydrogen battery, or a nickel cadmium battery can be appropriately used.

Battery module 20 includes battery holder 21 that houses the plurality of secondary battery cells 1. Battery holder 21 is provided with a plurality of housing tubes for individually housing secondary battery cells 1. This kind of battery holder 21 can be made of resin such as polycarbonate excellent in insulation properties.

### (Circuit board 23)

Battery module 20 is connected to a predetermined array using lead plate 25 and is connected to circuit board 23. Circuit board 23 is equipped with electronic components that implement a charge and discharge circuit for charging and discharging secondary battery cell 1, a protection circuit for monitoring voltage and temperature of secondary battery cell 1 and cutting off a current in an abnormal state, and the like. Circuit board 23 is composed of a glass epoxy board or the like.

As illustrated in Fig. 6, circuit board 23 is fixed at a fixed position in battery holder 21 of battery module 20 using fixture 17. Fixture 17 illustrated in the drawing is a set screw. Circuit board 23 fixed to battery module 20 is disposed at a fixed position in housing 14 while battery module 20 is housed in body case 11. Battery module 20 housed in outer covering case 10 is fixed to body case 11 as illustrated in Fig. 6 when coupling screw 18 inserted into screw hole 11h of boss 11g provided in bottom plate 11a of body case 11 is screwed into battery holder 21. O-ring 19 is disposed between boss 11g and battery holder 21, so that waterproof structure is formed in a part around screw hole 11h into which coupling screw 18 is screwed.

### (Connector 3)

Battery pack 100 includes connector 3 that is fixed to lid case 12 of outer covering case 10 with waterproof structure. Connector 3 is fixed to lid case 12 of outer covering case 10 with the waterproof structure described above. Thus, this battery pack includes connector 3 fixed with the waterproof structure using lid case 12 of outer covering case 10 as fixed member 2.

Outer covering case 10 illustrated in Fig. 5 is provided with protrusion 15 that protrudes outward from a housing region of battery module 20 housed inside, and connector 3 is disposed on protrusion 15. The structure in which connector 3 is provided on protrusion 15 of outer covering case 10 as described above has an advantage of enabling connector body 3A inserted into fixed member 2 and screw receiving member 4 fixed to the inside of fixed member 2 to be disposed without being affected by placement of battery module 20 housed in outer covering case 10.

Battery pack 100 illustrated in Fig. 5 is provided with a pair of protrusions 15 protruding to respective sides at one end of outer covering case 10, and connectors 3 are fixed to respective protrusions 15. One of the pair of connectors 3 serves as a charging connector for charging secondary battery cell 1 housed, and the other serves as a discharging connector for discharging secondary battery cell 1 housed. As indicated by a chain line in Fig. 2, each connector 3 is connected to circuit board 23 with lead wire 31 inside outer covering case 10. Then, power supplied from the charging connector is supplied to secondary battery cells 1 through circuit board 23 to charge each secondary battery cell 1, and power discharged from each secondary battery cell 1 is output from the discharging connector through circuit board 23 to supply power to a load externally connected. The charging connector is coupled to a connection plug (not illustrated) connected to a charger to supply power from the charger. The discharging connector is coupled to a connection plug (not illustrated) connected to the load to output power from battery pack 100 to the load.

### INDUSTRIAL APPLICABILITY

The waterproof structure of the connector according to the present invention is suitably used with various housings for which waterproof structure is required as fixed members. Particularly, the battery pack including the connector can be suitably used as a power source for driving a self-propelled robot for home delivery, an electric cart for home delivery or a golf course, an electric scooter, a construction machine, or a vehicle such as a hybrid vehicle or an electric vehicle. The battery pack can be also appropriately used for not only a power source for driving an electric-assist bicycle, but also power sources for portable electric devices such as a wireless device, an electric cleaner, and an electric power tool, a backup power source for a server or a power source device installation for home use, business use, and factory use in stationary power storage applications.

### REFERENCE MARKS IN THE DRAWINGS

- 100: battery pack
- 1: secondary battery cell
- 2: fixed member
- 2X: first surface
- 2Y: second surface
- 2A: connector insertion port
- 2B: screw insertion port
- 3: connector
- 4: screw receiving member
- 4A: facing surface
- 5: packing member
- 5A: center hole
- 5B: through-hole
- 6: O-ring
- 7: fixing screw
- 7A: tapping screw
- 7a: head part
- 7b: screw part
- 10: outer covering case
- 11: body case
- 11a: bottom plate
- 11b: side plate
- 11e: rib
- 11f: screw hole
- 11g: boss
- 11h: screw hole
- 12: lid case
- 12A: plate part
- 13: housing space
- 14: housing
- 16: packing
- 17: fixture
- 18: coupling screw
- 19: O-ring
- 20: battery module
- 21: battery holder
- 23: circuit board
- 25: lead plate
- 31: connector body
- 32: flange part
- 32a: recess
- 33: screw insertion hole
- 34: body tubular part
- 35: terminal coupler
- 36: terminal coupler
- 39: lead wire
- 41: screw fixing part
- 42: coupler
- 43: connector insertion part
- 44: insertion hole
- 44a: female screw hole
- 44b: guide hole
- 45: positioning recess
- 46: opening edge part
- 47: cutout
- 92: plate part
- 92A: insertion opening
- 92B: female screw hole
- 93: connector
- 93A: nector body
- 93B: flange part
- 93b: coupling hole
- 96, 96A, 96B: O-ring
- 97: set screw

## Claims

1. A waterproof structure of a connector, the waterproof structure comprising:
a fixed member including a connector insertion port opened and a plurality of screw insertion ports provided around the connector insertion port;
a connector including
a connector body inserted into the connector insertion port; and
a flange part provided along a periphery of the connector body and disposed facing a first surface of the fixed member,
a screw receiving member disposed facing a second surface of the fixed member and into which a fixing screw passing through the flange part and the fixed member is screwed;
a packing member interposed between the fixed member and the flange part, and disposed along an edge of an opening of the connector insertion port; and
an O-ring interposed between the fixed member and the screw receiving member, and disposed along an edge of an opening of each of the screw insertion ports,
the screw receiving member including:
a plurality of screw fixing parts each disposed facing a different one of the screw insertion ports and into each of which a different one of the fixing screws is screwed without passing through different one of the screw fixing parts; and
a coupler coupling the plurality of screw fixing parts, and
the flange part including a screw insertion hole at a position facing corresponding one of the screw insertion ports,
wherein the O-ring seals the opening of each of the screw insertion ports while the fixing screw including inserted through the screw insertion hole and the corresponding one of the screw insertion ports is screwed into a corresponding one of the screw fixing parts with an O-ring, and
the packing member is sandwiched between the flange part and the fixed member to seal the opening of the connector insertion port with the packing member.

2. The waterproof structure of a connector according to Claim 1, wherein the packing member is in a plate shape including a center hole opened along the edge of the opening of the connector insertion port of the fixed member, and includes an outer peripheral part facing the screw insertion port, the outer peripheral part including a through-hole opened along the edge of the opening of each of the screw insertion ports.

3. The waterproof structure of a connector according to Claim 1, wherein
the screw fixing part of the screw receiving member includes an insertion hole that guides the fixing screw, and
the insertion hole is a female screw hole screwed with the fixing screw.

4. The waterproof structure of a connector according to Claim 1, wherein
the fixing screw is a tapping screw, and
the screw fixing part includes a guide hole that guides the tapping screw.

5. The waterproof structure of a connector according to Claim 1, wherein the screw receiving member is provided with a positioning recess for fixing the O-ring at a fixed position, the O-ring being disposed along the edge of the opening of each of the screw insertion ports.

6. The waterproof structure of a connector according to Claim 5, wherein the screw receiving member specifies an amount of squeezing of the O-ring while an opening edge of the positioning recess is in contact with the second surface of the fixed member.

7. A battery pack comprising:
the connector disposed with the waterproof structure according to any one of Claims 1 to 6;
an outer covering case configured to house one or more secondary battery cells; and
a connector provided in the outer covering case for charging and/or discharging the secondary battery cells,
wherein the connector is provided in the outer covering case with the waterproof structure, the outer covering case serving as the fixed member.
